Europäisches Patentamt

European Patent Office

Office européen des brevets

(19)

(11) **EP 1 243 084 B1**

(12) **EUROPÄISCHE PATENTSCHRIFT**

(45) Veröffentlichungstag und Bekanntmachung des Hinweises auf die Patenterteilung:
**10.03.2004 Patentblatt 2004/11**

(21) Anmeldenummer: **00991103.3**

(22) Anmeldetag: **19.12.2000**

(51) Int Cl.⁷: **H04B 3/54**, H04Q 11/04

(86) Internationale Anmeldenummer:
**PCT/DE2000/004546**

(87) Internationale Veröffentlichungsnummer:
**WO 2001/050628 (12.07.2001 Gazette 2001/28)**

(54) **UMSETZUNG EINES BIDIREKTIONALEN SO-DATENSTROMS FUR EINE UBERMITTLUNG UBER EIN NIEDERSPANNUNGSSTROMNETZ**

METHOD AND DEVICE FOR TRANSPOSING A BI-DIRECTIONAL S 0? DATA STREAM FOR TRANSMISSION VIA A LOW-VOLTAGE NETWORK

PROCEDE ET DISPOSITIF POUR CONVERTIR UN FLUX DE DONNEES S 0? AFIN DE LE TRANSMETTRE SUR UN RESEAU BASSE TENSION

(84) Benannte Vertragsstaaten:
**AT BE CH CY DE DK ES FI FR GB GR IE IT LI LU MC NL PT SE TR**

(30) Priorität: **30.12.1999 DE 19963800**

(43) Veröffentlichungstag der Anmeldung:
**25.09.2002 Patentblatt 2002/39**

(73) Patentinhaber: **SIEMENS AKTIENGESELLSCHAFT
80333 München (DE)**

(72) Erfinder:
 • **IDE, Hans-Dieter
  44287 Dortmund (DE)**
 • **NEUHAUS, Ralf
  44534 Lünen (DE)**
 • **STOLLE, Jörg
  45478 Mülheim (DE)**

(56) Entgegenhaltungen:
 **EP-A- 0 913 955**

 • **HENSEN C ET AL: "ISDN-So-Bus Extension by Power-Line Using CDMA Technique" PROCEEDINGS OF THE 3RD INTERNATIONAL SYMPOSIUM ON POWER-LINE COMMUNICATIONS AND ITS APPLICATIONS (ISPLC'99), LANCASTER, UK, 30. März 1999 (1999-03-30) - 1. April 1999 (1999-04-01), XP001009460**
 • **FÖHST C ET AL: "Unter Strom -Die Power-Line-Technologie vor dem kommerziellen Einsatz" NET - ZEITSCHRIFT FÜR KOMMUNIKATIONSMANAGEMENT, Bd. 52, Nr. 7, 1998, Seiten 48-49, XP000777785 ISSN: 0947-4765**

EP 1 243 084 B1

**Beschreibung**

Die starke Entwicklung des Telekommunikationsmarktes in den letzten Jahren hat zur Folge, daß der Suche nach bisher ungenutzten Übertragungskapazitäten mehr Bedeutung beigemessen wird, bzw. daß versucht wird vorhandene Übertragungskapazitäten effizienter zu nutzen. Ein bekanntes Datenübertragungsverfahren ist die Übermittlung von Daten über das Stromversorgungsnetz, in der Literatur häufig als 'Powerline Communication' kurz mit 'PLC' bezeichnet. Ein Vorteil der Nutzung des Stromversorgungsnetzes als Medium zur Datenübertragung liegt in der bereits bestehenden Netzinfrastruktur. So verfügt fast jeder Haushalt sowohl über einen Zugang zum Stromversorgungsnetz als auch über ein bestehendes, weit verzweigtes Inhausstromnetz.

Das Stromversorgungsnetz gliedert sind in Europa je nach Art der Energieübertragung in verschiedene Netzstrukturen bzw. Übertragungsebenen. Die Hochspannungsebene mit einem Spannungsbereich von 110 kV bis 380 KVB dient einer Energieübertragung über weite Entfernungen. Die Mittelspannungsebene mit einem Spannungsbereich von 10 kV bis 38 kV dient dazu, die elektrische Energie vom Hochspannungsnetz in Verbrauchernähe zu führen und wird für den Verbraucher durch geeignete Netztransformatoren auf eine Niederspannungsebene mit einem Spannungsbereich bis 0,4 kV abgesenkt. Die Niederspannungsebene untergliedert sich wiederum in einen sogenannten Außerhausbereich - auch als 'Last Mile' oder 'Access Bereich' bezeichnet - und in einen sogenannten Inhausbereich - auch als 'Last Meter' bezeichnet. Der Außerhausbereich der Niederspannungsebene definiert den Bereich des Stromversorgungsnetzes zwischen Netztransformator und einer jeweils einem Verbraucher zugeordneten Zählereinheit. Der Inhausbereich der Niederspannungsebene definiert den Bereich von der Zählereinheit bis zu den Anschlußeinheiten für den Verbraucher.

Für eine Datenübertragung über das Stromversorgungsnetz sind in Europa durch die Norm EN 50065 vier unterschiedliche Frequenzbereiche - in der Literatur häufig als CENELEC-Bänder A bis D bezeichnet - mit einem zugelassenen Frequenzbereich von 9 kHz bis 148,5 kHz und jeweils einer maximal zulässigen Sendeleistung festgelegt, die allein für eine Datenübermittlung auf Basis der 'Powerline Communication' reserviert sind. Durch die in diesem Frequenzbereich zur Verfügung stehende geringe Bandbreite und die eingeschränkte Sendeleistung sind hierbei jedoch nur Datenübertragungsraten von einigen 10 kBit/s realisierbar.

Für Telekommunikationsanwendungen, wie z. B. einer Übermittlung von Sprachdaten, werden in der Regel jedoch Datenübertragungsraten im Bereich von einigen MBit/s benötigt. Für die Realisierung einer solchen Datenübertragungsrate ist vor allem eine genügend große Übertragungsbandbreite erforderlich, die ein Frequenzspektrum bis 20 MHz mit geeignetem Übertragungsverhalten bedingt. Eine Datenübertragung im Frequenzbereich bis 20 MHz mit einem geeigneten Übertragungsverhalten ist heute ausschließlich in der Niederspannungsebene des Stromversorgungsnetzes realisierbar.

In der europäischen Druckschrift EP 913955 A2 wird ein Übertragungsnetzwerk zur Verwendung in elektrischen Übertragungsoder Verteilungsnetzwerken offenbart. Mit einer zugehörigen Filtereinheit ist eine Frequenzkonversion eines zu übertragenden bzw. eines empfangenen Signals und eine Anpassung eines zugehörigen Signalpegels möglich. Eine zugehörige Kommunikationsanordnung arbeitet nach einem drahtlosen Telephoniestandard mit einer relativ hohen Trägerfrequenz, wobei Nutzinformationen der Kommunikationsanordnung über das elektrische Übertragungsoder Verteilungsnetzwerk zu übertragen sind. Die Frequenzkonversion findet bevorzugt von einem hohen in einem relativ niedrigen Frequenzbereich statt. Die Kommunikationsanordnung arbeitet vorzugsweise nach dem Standard CT2, der einen drahtlosen Sende- und Empfangsbetrieb auf einem Frequenzbereich um die Mittenfrequenz von 866 MHZ spezifiziert.

In der Druckschrift Hensen, C. : ISDN-S0-Bus Extension by Power-Line CDMA Technique, in: Proceedings of the 3rd International Symposium on Power-Line Communications and its Applications wird eine Übertragung eines $S_0$-Busses in einem Inhaus-Niederspannungsnetz offenbart. Dabei wird eine Mehrbenutzerumgebung mit Hilfe eines CDMA-Zugangsverfahrens (Code Division Multiple Access) realisiert. CDMA ist ein Zugangsverfahren, das mehreren Kommunikationsendeinrichtungen oder Datenstationen einen Zugriff auf einen gemeinsamen Übertragungskanal ermöglicht. In diesem Verfahren belegen mehrere einen gemeinsamen Übertragungskanal teilende Kommunikationsendeinrichtungen einen identischen Frequenzbereich, wobei das Nutzsignal für jede Kommunikationsendeinrichtung individuell kodiert wird. Die Kodierung basiert auf einer Spreizung eines Nutzinformationen zugeordneten Übertragungskanals ("Nutzkanal"). Im beschriebenen Verfahren erfolgt diese Kodierung durch jeweilige Multiplikation des Nutzsignals mit einem Pseudo-Rausch-Signalkode.

Eine Übermittlung von digitalen Sprachdaten stellt zusätzlich zur Bandbreite hohe Anforderungen in Bezug auf die Echtzeitfähigkeit und die zulässige maximale Bitfehlerrate - kurz BER - des Datenübertragungssystems. Zusätzlich bedingt eine Übermittlung von digitalen Sprachdaten eine kollisionsfreie Punkt-zu-Multipunkt-Datenübertragung im Vollduplexbetrieb, d.h. eine fehlerfreie, gleichzeitige Datenübertragung in beiden Übertragungsrichtungen zwischen mehreren Teilnehmern. Ein bekanntes Datenübertragungsverfahren zur Übertragung von digitalen Sprachdaten ist das ISDN-Übertragungsverfahren (Integrated Services Digital Network). Eine Datenübertragung gemäß dem ISDN-Übertragungsverfahren welches die obengenannten Bedingungen erfüllt kann beispielsweise auf Basis der bekannten $S_0$-Schnittstelle - in der Literatur häufig auch als Basisanschluß bezeichnet - erfolgen.

Der vorliegenden Erfindung liegt die Aufgabe zugrunde, Maßnahmen vorzusehen, durch welche eine Umsetzung einer $S_0$-Schnittstelle für eine Datenübermittlung auf Basis einer 'Powerline Communication' erfolgen kann.

Die Lösung dieser Aufgabe erfolgt erfindungsgemäß mit den Merkmalen des Patentanspruchs 1 bzw. 10.

Ein wesentlicher Vorteil des erfindungsgemäßen Verfahrens bzw. der erfindungsgemäßen Vorrichtung besteht darin, daß durch eine Umsetzung der bekannten $S_0$-Schnittstelle für eine Datenübermittlung auf Basis der 'Powerline Communication' herkömmliche ISDN-Kommunikationsendgeräte auf einfache und kostengünstige Weise für eine Datenübermittlung über ein Niederspannunasstromnetz verwendet werden können.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß die bestehende Baumstruktur des Niederspannungsstromnetzes im Inhausbereich auf einfache Weise auf eine Master-Slave-Kommunikationsbeziehung zwischen einer als Master-Einrichtung konfigurierten, einem jeweiligen Verbraucher zugeordneten Zählereinheit und den am Niederspannungsstromnetz angeschlossenen, als Slave-Einrichtung konfigurierten Einrichtungen abgebildet werden kann.

Ein weiterer Vorteil von in den Unteransprüchen definierten Ausgestaltungen der Erfindung besteht darin, daß durch eine Nutzung der für die $S_0$-Schnittstelle implementierten Übertragungsmechanismen eine bidirektionale und kollisionsfreie Datenübermittlung über das Niederspannungsstromnetz bei bis zu maximal 8 angeschlossenen Slave-Einrichtungen ohne zusätzlichen Implementierungsaufwand realisiert werden kann.

Ein Ausführungsbeispiel der Erfindung wird im folgenden anhand der Zeichnung näher erläutert.

Dabei zeigen:

Fig. 1: ein Strukturbild zur schematischen Darstellung eines Stromversorgungsnetzes;

Fig. 2: ein Strukturbild zur schematischen Darstellung einer Umwandlung eines in einem invertierten AMI-Kanalkode kodierten $S_0$-Datenstroms in einen binär kodierten $S_0$-Datenstrom;

Fig. 3: ein Strukturbild zur schematischen Darstellung einer Umsetzung des $S_0$-Datenstroms für eine Übermittlung über ein Niederspannungsnetz gemäß eines ersten Umsetzungsmodus;

Fig. 4: ein Strukturbild zur schematischen Darstellung einer Umsetzung des $S_0$-Datenstroms für eine Übermittlung über das Niederspannungsnetz gemäß eines zweiten Umsetzungsmodus.

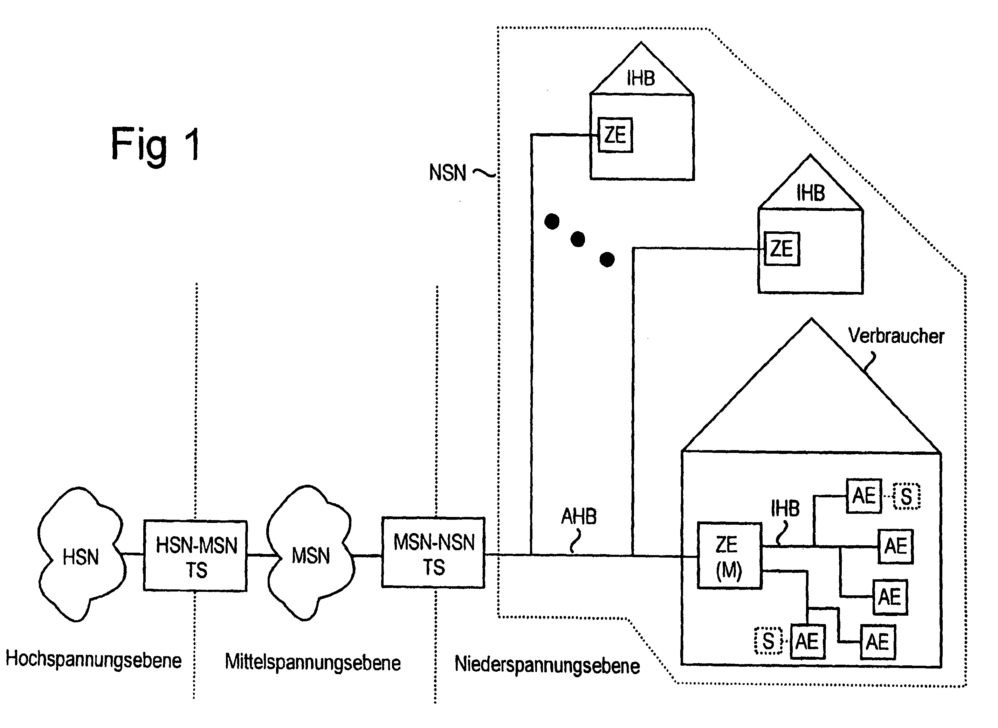

Fig. 1 zeigt ein Strukturbild mit einer schematischen Darstellung eines Stromversorgungsnetzes. Das Stromversorgungsnetz gliedert sind in Abhängigkeit der Energieübertragungart in verschiedene Netzstrukturen bzw. Übertragungsebenen. Die Hochspannungsebene bzw. das Hochspannungsnetz HSN mit einem Spannungsbereich von 110 kV bis 380 kV dient einer Energieübertragung über weite Entfernungen. Die Mittelspannungsebene bzw. das Mittelspannungsnetz MSN mit einem Spannungsbereich von 10 kV bis 38 kV dient dazu, die elektrische Energie vom Hochspannungsnetz in Verbrauchernähe zu führen. Das Mittelspannungsnetz MSN ist dabei über eine die jeweiligen Spannungen umsetzende Transformatorstation HSN-MSN TS mit dem Hochspannungsnetz HSN verbunden. Das Mittelspannungsnetz MSN ist zusätzlich über eine weitere Transformatorstation MSN-NSN TS mit dem Niederspannungsnetz NSN verbunden.

Die Niederspannungsebene bzw. das Niederspannungsnetz mit einem Spannungsbereich bis 0,4 kV gliedert sich in einen sogenannten Außerhausbereich AHB und in einen sogenannten Inhausbereich IHB. Der Außerhausbereich AHB definiert den Bereich des Niederspannungsnetzes NSN zwischen der weiteren Transformatorstation MSN-NSN TS und einer einem jeweiligen Verbraucher zugeordneten Zählereinheit ZE. Durch den Außerhausbereich AHB sind mehrere Inhausbereiche IHB mit der die Umsetzung auf das Mittelspannungsnetz MSN realisierenden weiteren Transformatorstation MSN-NSN TS verbunden. Der Inhausbereich IHB definiert den Bereich von der Zählereinheit ZE bis zu im Inhausbereich IHB angeordneten Anschlußeinheiten AE. Eine Anschlußeinheit AE ist beispielsweise eine an das Niederspannungsnetz NSN angeschlossene Steckdose. Das Niederspannungsnetz NSN im Inhausbereich IHB ist dabei in der Regel als Baumnetzstruktur ausgelegt, wobei die Zählereinheit ZE die Wurzel der Baumnetzstruktur bildet.

Für eine Übermittlung von digitalen Sprachdaten - insbesondere auf Basis der $S_0$-Schnittstelle - über das Stromversorgungsnetz ist eine Übertragungsbandbreite von einigen MBit/s mit einem geeigneten Übertragungsverhalten notwendig. Diese ist zur Zeit ausschließlich im Niederspannungsnetz NSN realisierbar. Die $S_0$-Schnittstelle verwendet als Leitungskode standardmäßig einen sogenannten 'invertierten AMI-Kanalkode' (Alternate Mark Inversion), welcher zur Umsetzung der $S_0$-Schnittstelle für eine Datenübermittlung über das Niederspannungsnetz NSN in einen binären Kode umgewandelt wird.

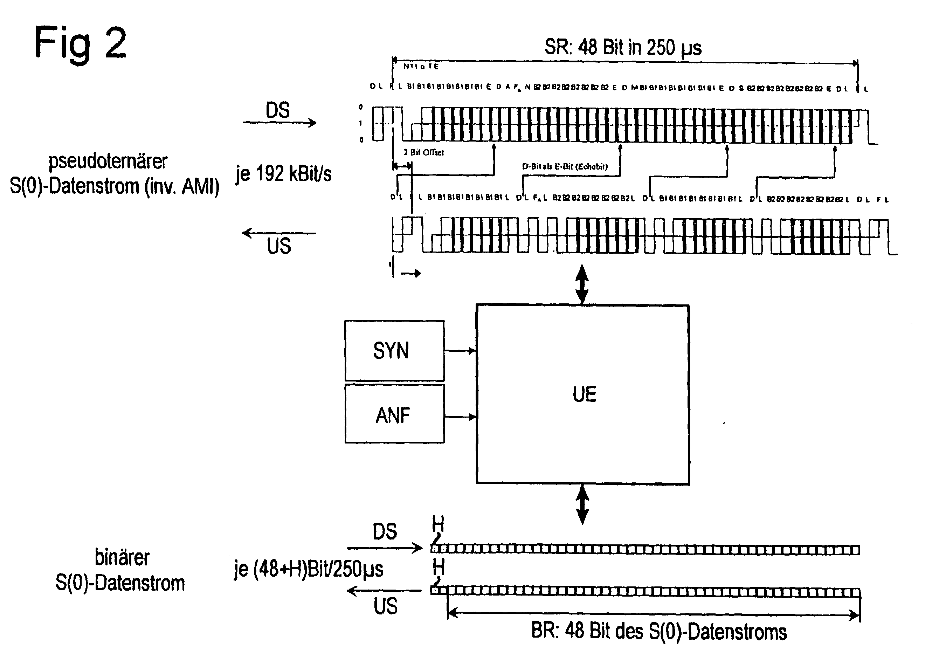

Fig. 2 zeigt ein Strukturbild zur schematischen Darstellung der Umwandlung eines im invertierten AMI-Kanalkode kodierten $S_0$-Datenstroms in einen binär kodierten $S_0$-Datenstrom. Ein $S_0$-Datenstrom be-

steht dabei aus einer Folge von nacheinander zu übertragenden, sogenannten $S_0$-Rahmen SR. Beim AMI-Kanalkode handelt es sich um einen pseudoternären Leitungskode, bei dem die beiden binären Zustände "0" und "1" durch die drei Signalpotentiale '0', '1' und '-1' repräsentiert werden. Hierbei wird beim invertierten AMI-Kanalkode der binäre Zustand "1" durch das Signalpotential '0' repräsentiert. Dem binären Zustand "0" wird entweder ein positives oder ein negatives Signalpotential '1' oder '-1' zugeordnet, wobei sich die Polarität zwischen zwei aufeinanderfolgenden "0"-Zuständen ändert.

Eine $S_0$-Schnittstelle umfaßt im wesentlichen 2 Nutzdatenkanäle, welche jeweils als ISDN-orientierte B-Kanäle mit einer Übertragungsbitrate von jeweils 64 kBit/s ausgestaltet sind und einen Signalisierungskanal, welcher als ISDN-orientierter D-Kanal mit einer Übertragungsbitrate von 16 kBit/s ausgestaltet ist. Für eine bidirektionale Datenübermittlung über die $S_0$-Schnittstelle ist in der Regel eine 4-Draht-Übertragung vorgesehen, wobei die beiden Übertragungsrichtungen - im folgenden als Downstream-Richtung DS und Upstream-Richtung US bezeichnet - über getrennte Leitungen geführt werden. Die Downstream-Richtung DS definiert dabei die Datenübertragung über eine Übertragungsstrecke von einer zentralen, die Übertragung steuernden Einrichtung - im folgenden als 'Master' M bezeichnet - zu weiteren an der Übertragungsstrecke angeschlossenen Einrichtungen - im folgenden als 'Slaves' S bezeichnet. Die Upstream-Richtung US definiert die Datenübertragung von den jeweiligen Slaves S zum Master M. Beim vorliegenden Ausführungsbeispiel wird die einem Inhausbereich IHB zügeordnete Zählereinheit ZE als Master M - durch das in Fig. 1 in Klammern gesetzte M angedeutet - und über die Anschlußeinheiten AE an das Niederspannungsnetz NSN im Inhausbereich IHB angeschlossenen Kommunikationseinrichtungen als Slaves S konfiguriert. Über die $S_0$-Schnittstelle sind durch den Master M maximal bis zu acht unterschiedliche Slaves S adressierbar.

In der Figur ist für einen im invertierten AMI-Kanalkode kodierten, pseudoternären $S_0$-Datenstrom jeweils ein $S_0$-Rahmen SR in Downstream-Richtung DS und in Upstream-Richtung US dargestellt. Ein $S_0$-Rahmen SR weist eine Rahmenlänge von 250 μs auf und umfaßt insgesamt 48 Bit. Im Rahmen eines $S_0$-Rahmens SR werden jeweils 16 Bit Nutzinformation über einen ersten Nutzdatenkanal B1 und 16 Bit Nutzinformation über einen zweiten Nutzdatenkanal B2 sowie 4 Bit Signalisierungsinformation über den Signalisierungskanal übermittelt. Des weiteren werden beispielsweise für eine Zugriffssteuerung, für eine Synchronisierung des Downstream-Datenstroms DS und des Upstream-Datenstroms US und für eine Realisierung von höheren Systemdiensten gemäß dem OSI-Schichtenmodell zusätzliche Steuerbits übermittelt. Somit ergibt sich sowohl für den Downstream-Datenstrom DS als auch für den Upstream-Datenstrom US jeweils eine Übertragungsbitrate von 192 kBit/s. Die Bedingungen für eine Datenübermittlung über die $S_0$-Schnittstelle sind in der ITU-T (International Telecommunication Union) Spezifikation 1.430 "ISDN User-Network Interfaces" standardisiert.

Der im invertierten AMI-Kanalkode kodierte, pseudoternäre $S_0$-Datenstrom wird durch eine Umwandlungseinheit UE in einen binären $S_0$-Datenstrom umgewandelt. Hierbei wird für den Downstream- und den Upstream-Datenstrom DS, US die im AMI-Kanalkode kodierte 48 Bit umfassende Information des $S_0$-Rahmens SR in eine 48 Bit umfassende, binär kodierte Information umgewandelt und durch einen 2-Bit langen Header H zu einem 50 Bit langen Binärrahmen BR zusammengefaßt. Der Header H umfaßt ein Synchronisations-Bit SYN und ein Anfangszustands-Bit ANF. Das Anfangszustands-Bit ANF beinhaltet eine Information über das dem ersten "0"-Zustand zugeordnete Signalpotential im AMI-Kanalkode. Da das Signalpotential für den "0"-Zustand das Potential '1' oder '-1' besitzen kann, ist diese Information für eine Wiederherstellbarkeit des ursprünglichen AMI-Kanalkodes auf der Empfängerseite notwendig. Das Synchronisations-Bit SYN dient einer Synchronisation der auf Empfängerseite aus den Binärrahmen BR wiederhergestellten, einander zugeordneten $S_0$-Rahmen SR für den Downstream-Datenstrom DS und den Upstream-Dateratrom US, da die einander zugeordneten $S_0$-Rahmen SR des Downstream- und den Upstream-Datenstromsy DS, US - wie aus der Figur ersichtlich - gegenseitig um zwei Bit versetzt sind.

Somit ergibt sich für den binären So-Datenstrom sowohl für den Downstream-Datenstrom DS als auch für den Upstream-Datenstrom US jeweils eine Übertragungsbitrate von

$$(48 + 2) \text{ Bit} / 250\mu s = 200 \text{ kBit/s.}$$

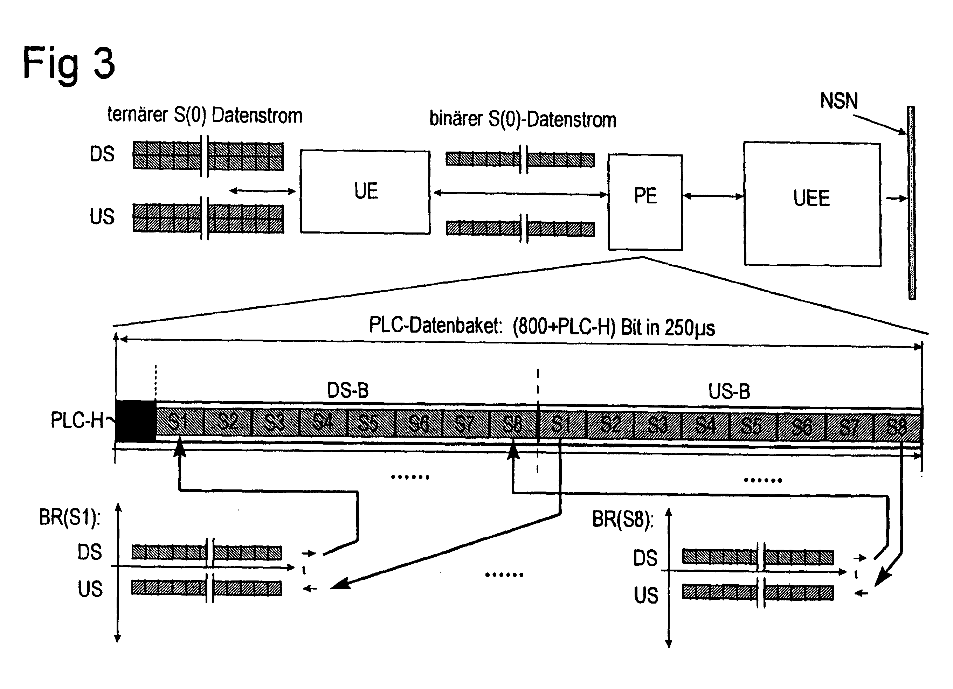

Fig. 3 zeigt ein Strukturbild zur schematischen Darstellung einer Umsetzung des im invertierten AMI-Kanalkode kodierten, pseudoternären $S_0$-Datenstroms für eine Übermittlung über das Niederspannungsnetz NSN gemäß eines ersten Umsetzungsmodus. In einem ersten Schritt wird der gemäß dem invertierten AMI-Kanalkode kodierte, pseudoternäre $S_0$-Datenstrom durch die Umwandlungseinheit UE - wie unter Bezugnahme auf Fig. 2 beschrieben - in einen binär kodierten $S_0$-Datenstrom umgewandelt. Der binär kodierte $S_0$-Datenstrom wird anschließend an eine Protokolleinheit PE weitergeleitet, durch welche der binär kodierte $S_0$-Datenstrom in ein für eine Datenübermittlung über das Niederspannungsnetz NSN vorgesehenes Datenformat umgewandelt wird.

Aufgrund der im Inhausbereich IHB des Niederspannungsnetzes NSN bestehenden Baumstruktur wird für eine Datenübermittlung zwischen den an das Niederspannungsnetz NSN im Inhausbereich IHB angeschlossenen Einrichtungen eine Master-Slave-Kommunikationsbeziehung eingerichtet. Hierbei wird die im Inhausbereich IHB angeordnete, die Wurzel der Baumstruktur bildende Zählereinheit ZE als Master M und die weiteren, über die Anschlußeinheiten AE an das Niederspannungsnetz NSN angeschlossenen Einrichtungen als Slaves S definiert.

Für eine Datenübermittlung über das Niederspannungsnetz NSN sind sogenannte PLC-Datenpakete mit einer Länge von jeweils 250 µs vorgesehen, die in einen PLC-Header PLC-H und in einen Nutzdatenbereich untergliedert sind. Der PLC-Header PLC-H umfaßt im wesentlichen eine Adreßinformation zur Adressierung der an das Niederspannungsnetz NSN angeschossenen Slaves S. Die Adreßinformation kann dabei durch eine den Slaves S jeweils eindeutig zugeordnete MAC-Adresse (Medium Access Control) gebildet werden. Die MAC-Adresse ist eine eindeutige, auf der Schicht 2 des OSI-Referenzmodells angesiedelte 6 Byte lange Hardware-Adresse. Alternativ kann eine Adressierung der an das Niederspannungsnetz NSN angeschlossenen Slaves S durch eine auf dem ATM-Protokoll (Asynchronous Transfer Modus) basierende VPI/VCI-Adressierung (Virtual Path Identifer / Virtual Channel Identifer) realisiert werden.

Für eine Realisierung einer bidirektionalen Datenübertragung über das Niederspannungsnetz NSN wird der Nutzdatenbereich des PLC-Datenpakets mit Hilfe des Zeitduplexverfahrens - in der Literatur auch als Time Division Duplex kurz 'TDD' bezeichnet - in zwei Rahmen - in der Literatur auch als Duplexbereiche bezeichnet - untergliedert. Hierbei erfolgt eine Aufteilung des Nutzdatenbereiches in einen Downstreambereich DS-B und in einen Upstreambereich US-B. Die im wesentlichen - bei einer relativen Verschiebung um 2 Bit - zeitgleich ankommenden Binärrahmen ER des Downstream- und des Upstream-Datenstroms DS,US des binär kodierten $S_0$-Datenstroms werden dabei zeitlich aufeinanderfolgend in den jeweiligen Downstreamoder Upstreambereich DS-B, US-B des Nutzdatenreiches des PLC-Datenpakets eingefügt.

Für eine Gewährleistung einer kollisionsfreien Datenübertragung über das Niederspannungsnetz NSN werden der Downstreamund der Upstreambereich DS-B, US-B des Nutzdatenbereiches des PLC-Datenpakets mit Hilfe des Zeitmultiplex-basierten Mehrfachzugriffssteuerungsverfahrens - in der Literatur auch als Time Division Multiple Access kurz 'TDMA' bezeichnet - in mehrere Kanäle - häufig auch als Zeitschlitze bezeichnet - untergliedert. Die Anzahl der Kanäle je Duplexbereich entspricht dabei der maximalen Anzahl von an das Niederspannungsnetz NSN anschließbaren Slaves S. Wie bereits beschrieben sind über die $S_0$-Schnittstelle durch den Master M maximal bis zu acht unterschiedliche Slaves S1 - S8 adressierbar, so daß die Duplexbereiche im vorliegenden Ausführungsbeispiel jeweils in acht jeweils 50 Bit lange Kanäle untergliedert werden. Die jeweilige Untergliederung der Duplexbereiche in eine gleiche Anzahl von Kanälen wird in Literatur als symmetrische Rahmenbildung bezeichnet.

Jedem Slave S1 - S8 wird je Duplexbereich ein Kanal fest zugeordnet, indem er senden bzw. empfangen darf, d.h. die den Slaves S1 - S8 zugeordneten Binärrahmen BR werden durch die Protokolleinheit PE in den jeweiligen, dem Slave S1 - S8 zugeordneten, Kanal des jeweiligen Duplexbereichs eingefügt bzw. aus diesem entnommen. Bei der vorliegenden Master-Slave-Kommunikationsbeziehung ist beispielsweise ein zyklisch fester, hierarchischer Sendeablauf für jeden Duplexbereich realisiert. Dieser Sendeablauf wird in der Literatur üblicherweise als 'Polling' bezeichnet und läßt sich mit Hilfe des TDMA-Verfahrens gut realisieren.

Die PLC-Datenpakete werden anschließend für eine Übertragung über das Niederspannungsnetz NSN von der Protokolleinheit PE an eine Übertragungseinheit UEE übermittelt. Die Übertragungseinheit UEE realisiert die Datenübertragung beispielsweise gemäß dem OFDM-Übertragungsverfahren (Orthogonal Frequency Division Muliplex) mit einer vorgeschalteten FEC-Fehlerkorrektur (Forward Error Correction) und einer vorgeschalteten DQPSK-Modulation (Differenz Quadratur Phase Shift Keying). Nähere Information zu diesen Übertragungs- und Modulationsverfahren können aus der bisher nicht veröffentlichten Diplomarbeit von Jörg Stolle: "Powerline Communication PLC", 5/99, Siemens AG, entnommen werden.

Bei diesem ersten Umsetzungsmodus wird der Nutzdatenbereich des PLC-Datenpakets in insgesamt 16 Kanäle mit jeweils 50 Bit Länge aufgeteilt. Somit ergibt sich - ohne Berücksichtigung des PLC-Headers - eine relativ hohe benötigte Übertragungsbitrate von:

$$(16 \times 50 \text{ Bit}) / 250\mu s = 3200 \text{ kBit/s.}$$

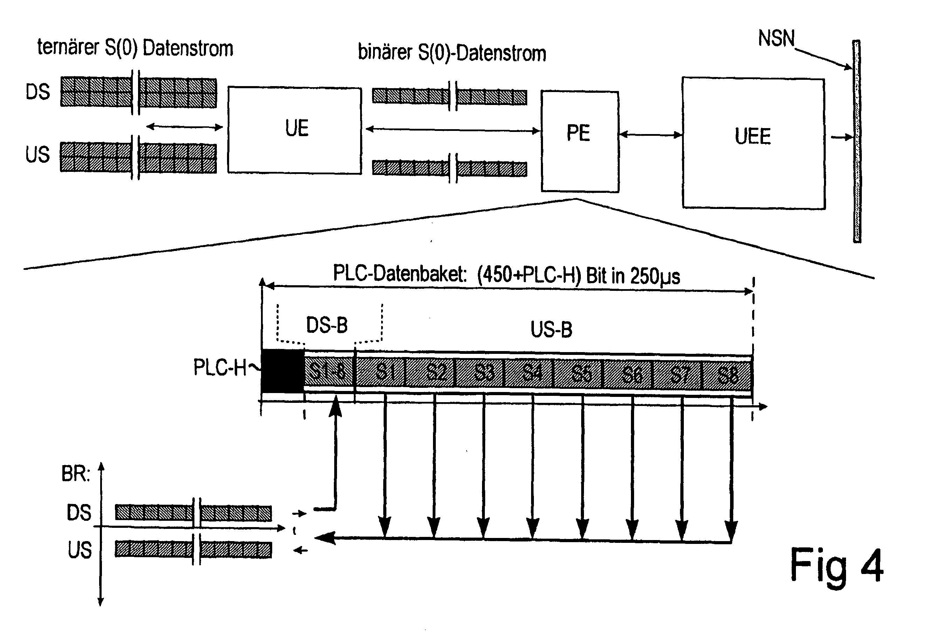

Fig. 4 zeigt ein Strukturbild zur schematischen Darstellung einer Umsetzung des im invertierten AMI-Kanalkode kodierten, pseudoternären $S_0$-Datenstroms für eine Übermittlung über das Niederspannungsnetz NSN gemäß eines zweiten Umsetzungsmodus. Analog zum ersten Umsetzungsmodus wird der gemäß dem invertierten AMI-Kanalkode kodierte, pseudoternäre $S_0$-Datenstrom in einem ersten Schritt durch die Umwandlungseinheit UE - wie unter Bezugnahme auf Fig. 2 beschrieben - in einen binär kodierten $S_0$-Datenstrom umgewandelt. Der binär kodierte $S_0$-Datenstrom wird anschließend an eine Protokolleinheit PE weitergeleitet, durch welche der binär kodierte $S_0$-Datenstrom in ein für eine Datenübermittlung über das Niederspannungsnetz NSN vorgesehenes Datenformat umgewandelt wird.

Im Gegensatz zum ersten Umsetzungsmodus bei dem eine symmetrische Rahmenbildung erfolgt, wird beim zweiten Umsetzungsmodus eine asymmetrische Rahmenbildung realisiert. Anlog zum ersten Umsetzungsmodus wird der Nutzdatenbereich des PLC-Datenpakets mit Hilfe des Zeitduplexverfahrens in einen Downstreambereich DS-B und in einen Upstreambereich US-B untergliedert. Des weiteren wird für eine Gewährleistung einer kollisionsfreien Datenübertragung über das Niederspannungsnetz NSN der Upstreambereich US-B des Nutzdatenbereiches des PLC-Datenpakets mit Hilfe des Zeitmultiplex-basierten Mehrfachzugriffssteuerungsverfahrens in acht jeweils 50 Bit lange Kanäle untergliedert. Jedem Slave S1 - S8 wird im Upstreambereich US-B ein Kanal fest zugeordnet, indem er senden darf, d.h. die den Slaves S1 - S8 zugeordneten Binärrahmen BR werden durch die Protokolleinheit PE in den jeweiligen, dem Slave S1 - S8 zugeordneten Kanal des Upstreambereichs US-B eingefügt. Bei der vorliegenden Master-Slave-Kommunikationsbeziehung wird der Sendeablauf analog zum ersten Umsetzungsmodus im 'Polling' realisiert.

Der Downstreambereich DS-B umfaßt beim zweiten Umsetzungsmodus nur einen einzelnen 50 Bit langen Kanal, über den eine Datenübermittlung ausgehend vom Master M zu den Slaves S1 - S8 erfolgt. Da in der Downstream-Richtung DS der Master M als einzige Einrichtung sendet, kann auf die im ersten Umsetzungsmodus realisierte Punkt-zu-Multipunktstruktur verzichtet werden. Beim zweiten Umsetzungsmodus wird die zu übermittelnde Nutzinformation parallel an alle Slaves S1 - S8 gesendet. Dieses Übertragungsverfahren wird im allgemeinen als 'Broadcasting-Betrieb' bezeichnet. Auf diese Weise kann die für eine Datenübermittlung über das Niederspannungsnetz NSN in Downstream-Richtung DS benötigte Übertragungsbitrate reduziert werden.

Die PLC-Datenpakete werden anschließend für eine Übertragung über das Niederspannungsnetz NSN von der Protokolleinheit PE an eine Übertragungseinheit UEE übermittelt. Die Übertragungseinheit UEE realisiert die Datenübertragung analog zum ersten Umsetzungsmodus gemäß dem OFDM-Übertragungsverfahren mit einer vorgeschalteten FEC-Fehlerkorrektur und einer vorgeschalteten DQPSK-Modulation.

Somit ergibt sich beim zweiten Umsetzungsmodus - ohne Berücksichtigung des PLC-Headers - eine im Gegensatz zum ersten Umsetzungsmodus geringere benötigte Übertragungsbitrate von:

$$(9 \times 50 \text{Bit}) / 250 \mu s = 1800 \text{ kBit/s}.$$

Auf der Empfängerseite erfolgt ein Auslesen der PLC-Datenpakete aus dem Niederspannungsnetz NSN und eine Umwandlung in einen gemäß dem invertierten AMI-Kanalkode kodierten, pseudoternären $S_0$-Datenstrom analog zu der beschriebenen Funktionsweise lediglich in umgekehrter Richtung.

**Patentansprüche**

1. Verfahren zur Umsetzung eines bidirektionalen $S_0$-Datenstroms für eine Übermittlung über ein Niederspannungsstromnetz (NSN),

   bei dem der pseudoternäre, aus einer Folge von $S_0$-Rahmen (SR) bestehende $S_0$-Datenstrom in einen binären, aus einer Folge von Binärrahmen (BR) bestehenden Datenstrom umgewandelt wird, bei dem mit Hilfe eines Zeitduplexverfahrens ein für eine Datenübermittlung über das Niederspannungsstromnetz (NSN) vorgesehenes Übertragungspaket in einen ersten Bereich (DS-B) für eine Datenübermittlung in einer ersten Übertragungsrichtung (DS) und in einen zweiten Bereich (US-B) für eine Datenübermittlung in einer zweiten Übertragungsrichtung (US) aufgeteilt wird, und

   bei dem die Binärrahmen (BR) richtungsabhängig in den ersten oder den zweiten Bereich (DS-B, US-B) des Übertragungspakets eingefügt und an eine Übertragungseinheit (UEE) zur Übermittlung über das Niederspannungsstromnetz (NSN) weitergeleitet werden.

2. Verfahren nach Anspruch 1,
   **dadurch gekennzeichnet,**
   **daß** für eine Datenübermittlung über das Niederspannungsstromnetz (NSN) eine Master-Slave-Kommunikationsbeziehung eingerichtet wird.

3. Verfahren nach Anspruch 2,
   **dadurch gekennzeichnet,**
   **daß** im ersten Bereich (DS-B) Binärrahmen (BR) von einer Master-Einrichtung (M) zu mindestens einer Slave-Einrichtung (S1 - S8) und im zweiten Bereich (US-B) Binärrahmen (BR) von der mindestens einen Slave-Einrichtung (S1 - S8) zur Master-Einrichtung (M) übermittelt werden.

4. Verfahren nach Anspruch 3,
   **dadurch gekennzeichnet,**
   **daß** durch die Master-Einrichtung (M) eine Vergabe von Sendeund Empfangsrechten für die Slave-Einrichtungen (S1 - S8) im Polling-Verfahren erfolgt.

5. Verfahren nach einem der vorhergehenden Ansprüche,
   **dadurch gekennzeichnet,**
   **daß** mit Hilfe eines Zeitmultiplex-basierten Mehrfachzugriffssteuerungsverfahrens der erste und der zweite Bereich (DS-B, US-B) des Übertragungspakets jeweils in mindestens einen Teilrahmen gegliedert wird,
   und **daß** die Binärrahmen (BR) jeweils richtungsabhängig in einen Teilrahmen des ersten oder des zweiten Bereichs (DS-B, US-B) des Übertragungspakets eingefügt werden.

6. Verfahren nach Anspruch 5,
   **dadurch gekennzeichnet,**
   **daß** der erste und der zweite Bereich (DS-B, US-B) jeweils in acht Teilrahmen gegliedert werden, wobei jeder am Niederspannungsstromnetz (NSN) angeschlossenen Slave-Einrichtung (S1 - S8) für eine bidirektionale Datenübermittlung mit der Master-Einrichtung (M) jeweils ein Teilrahmen im ersten Bereich (DS-B, und im zweiten Bereich (US-B) fest zugewiesen wird.

7.  Verfahren nach Anspruch 5,
    **dadurch gekennzeichnet,**
    **daß** der erste Bereich (DS-B) in einen einzelnen Teilrahmen und der zweite Bereich (US-B) in acht Teilrahmen gegliedert wird, wobei jeder am Niederspannungsstromnetz (NSN) angeschlossenen Slave-Einrichtung (S1 - S8) für eine Datenübermittlung zur Master-Einrichtung (M) jeweils ein Teilrahmen im zweiten Bereich (US-B) fest zugewiesen wird und eine Datenübermittlung von der Master-Einrichtung (M) zu den Slave-Einrichtungen (S1 - S8) gemeinsam über den Teilrahmen des ersten Bereichs (DS-B) erfolgt.

8.  Verfahren nach einem der vorhergehenden Ansprüche,
    **dadurch gekennzeichnet,**
    **daß** bei der Umwandlung eines $S_0$-Rahmens (SR) zu einem Binärrahmen (BR) eine Information zur Rückgewinnung des So-Rahmens (SR) an den Binärrahmen (BR) angefügt wird.

9.  Verfahren nach Anspruch 8,
    **dadurch gekennzeichnet,**
    **daß** als Information ein Anfangszustands-Bit (ANF) und ein Synchronisations-Bit (SYN) in den Binärrahmen (BR) eingefügt werden.

10. Vorrichtung zur Umsetzung eines bidirektionalen $S_0$-Datenstroms für eine Übermittlung über ein Niederspannungsstromnetz (NSN),
    mit einer Umwandlungseinheit (UE) zur Umwandlung der pseudoternären, aus einer Folge von $S_0$-Rahmen (SR) bestehenden $S_0$-Datenstrom in einen binären, aus einer Folge von Binärrahmen (BR) bestehenden Datenstrom,
    mit einer Protokolleinheit (PE) zum Einfügen der Binärrahmen (BR) in ein für eine Datenübermittlung über das Niederspannungsstromnetz (NSN) vorgesehenes Übertragungspaket, wobei das Übertragungspaket mit Hilfe eines Zeitduplexverfahrens in einen ersten Bereich (DS-B) für eine Datenübermittlung von Binärrahmen (BR) in einer ersten Übertragungsrichtung (DS) und in einen zweiten Bereich (US-B) für eine Datenübermittlung von Binärrahmen (BR) in einer zweiten Übertragungsrichtung (US) aufgeteilt ist,
    mit einer Übertragungseinheit (UEE) zum Einspeisen der Übertragungspakete in das Niederspannungsstromnetz (NSN).

11. Vorrichtung nach Anspruch 10,
    **dadurch gekennzeichnet,**
    **daß** für eine Datenübermittlung über das Niederspannungsstromnetz (NSN) eine Master-Slave-Kommunikationsbeziehung eingerichtet ist.

12. Vorrichtung nach Anspruch 11,
    **dadurch gekennzeichnet,**
    **daß** eine einem jeweiligen Inhausbereich (IHB) des Niederspannungsstromnetzes (NSN) zugeordnete Zählereinheit (ZE) als Master-Einrichtung (M) ausgestaltet ist.

13. Vorrichtung nach Anspruch 12,
    **dadurch gekennzeichnet,**
    **daß** uber jeweils eine Anschlußeinrichtung (AE) mit dem Inhausbereich (IHB) des Niederspannungsstromnetzes (NSN) verbundene Kommunikationseinrichtungen als Slave-Einrichtungen (S1 - S8) ausgestaltet sind.

14. Vorrichtung nach Anspruch 13,
    **dadurch gekennzeichnet,**
    **daß** maximal acht Slave-Einrichtungen (S1 - S8) an das Niederspannungsstromnetz (NSN) anschließbar sind.

**Claims**

1.  Method for conversion of a bidirectional $S_0$ data stream for transmission via a low-voltage power network (NSN),
    in which the pseudoternary $S_0$ data stream, comprising a sequence of $S_0$ frames (SR), is converted to a binary data stream comprising a sequence of binary frames (BR), in which method a transmission packet which is intended for data transmission via the low-voltage power network (NSN) is subdivided, using a time division duplexing method, into a first area (DS-B) for data transmission in a first transmission direction (DS) and into a second area (US-B) for data transmission in a second transmission direction (US), and
    in which method the binary frames (BR) are inserted into the first or into the second area (DS-B, US-B) of the transmission packet depending on the direction, and are passed to a transmission unit (UEE) for transmission via the low-voltage power network (NSN).

2.  Method according to Claim 1,
    **characterized**
    **in that** a master-slave communication relationship is set up for data transmission via the low-voltage power network (NSN).

3.  Method according to Claim 2,

**characterized**

**in that** binary frames (BR) are transmitted in the first area (DS-B) from a master device (M) to at least one slave device (S1 - S8), and binary frames (BR) are transmitted in the second area (US-B) from the at least one slave device (S1 - S8) to the master device (M).

4. Method according to Claim 3,
**characterized**
**in that** the master device (M) allocates transmission and reception rights for the slave devices (S1 - S8) using a polling method.

5. Method according to one of the preceding claims,
**characterized**
**in that** the first area (D5-B) and the second area (US-B) of the transmission packet are each subdivided into at least one subframe by means of a multiple access control method based on time division multiplexing,
and **in that** the binary frames (BR) are each inserted into a subframe in the first area (DS-B) or in the second area (US-B) of the transmission packet depending on the direction.

6. Method according to Claim 5,
**characterized**
**in that** the first area (DS-B) and the second area (US-B) are each subdivided into eight subframes, with each slave device (S1 - S8) which is connected to the low-voltage power network (NSN) in each case being assigned one subframe in the first area (DS-B) and one subframe in the second area (US-B), on a permanent basis, for bidirectional data transmission with the master device (M).

7. Method according to Claim 5,
**characterized**
**in that** the first area (DS-B) is subdivided into an individual subframe, and the second area (US-B) is subdivided into eight subframes, with each slave device (S1 - S8) which is connected to the low-voltage power network (NSN) in each case being assigned one subframe in the second area (US-B), on a permanent basis, for data transmission to the master device (M), and data being transmitted from the master device (M) to the slave devices (S1 - S8) jointly via the subframes of the first area (DS-B).

8. Method according to one of the preceding claims,
**characterized**
**in that**, during conversion of an $S_0$ frame (SR) to a binary frame (BR), information is added to the binary frame (BR) for recovery of the $S_0$ frame (SR).

9. Method according to Claim 8,
**characterized**

**in that** an initial state bit (ANF) and a synchronization bit (SYN) are inserted as information into the binary frame (BR).

10. Apparatus for conversion of a bi-directional So data stream for transmission via a low-voltage power network (NSN),
having a conversion unit (UE) for conversion of the pseudoternary $S_0$ data stream, which comprises a sequence of $S_0$ frames (SR) to a binary data stream which comprises a sequence of binary frames (BR), having a protocol unit (PE) for insertion of the binary frames (BR) into a transmission packet which is intended for data transmission via the low-voltage power network (NSN), with the transmission packet being subdivided by means of a time division duplexing method into a first area (DS-B) for data transmission of binary frames (BR) in a first transmission direction (DS), and into a second area (US-B) for data transmission of binary frames (BR) in a second transmission direction (US), and having a transmission unit (UEE) for feeding the transmission packets into the low-voltage power network (NSN).

11. Apparatus according to Claim 10,
**characterized**
**in that** a master-slave communication relationship is set up for data transmission via the low-voltage power network (NSN).

12. Apparatus according to Claim 11,
**characterized**
**in that** a counter unit (ZE), which is associated with a respective in-house area (IHB) of the low-voltage power network (NSN), is in the form of a master device (M).

13. Apparatus according to Claim 12,
**characterized**
**in that** communication devices which are each connected via a connecting device (AE) to the in-house area (IHB) of the low-voltage power network (NSN) are in the form of slave devices (S1 - S8).

14. Apparatus according to Claim 13,
**characterized**
**in that** a maximum of eight slave devices (S1 - S8) can be connected to the low-voltage power network (NSN).

**Revendications**

1. Procédé pour convertir un flux de données $S_0$ bidirectionnel afin de le transmettre sur un réseau basse tension (NSN), dans lequel

-    le flux de données $S_0$ pseudo-ternaire, composé d'une suite de trames $S_0$ (SR), est converti en un flux de données binaires composé d'une suite de trames binaires (BR),
-    à l'aide d'un procédé de duplexage temporel, un paquet de transmission, prévu pour une transmission de données sur le réseau électrique basse tension (NSN), est réparti en une première partie (DS-B) pour une transmission de données dans une première direction de transmission (DS) et en une deuxième partie (US-B) pour une transmission de données dans une deuxième direction de transmission (US) et
-    les trames binaires (BR) sont insérées, en dépendance de la direction, dans la première ou dans la deuxième partie (DS-B, US-B) du paquet de transmission et transmises à une unité de transmission (UEE) pour être transmises sur le réseau électrique basse tension (NSN).

2.    Procédé selon la revendication 1, **caractérisé en ce qu'**aux fins d'une transmission de données sur le réseau électrique basse tension (NSN) est établie une relation de communication «Master-Slave».

3.    Procédé selon la revendication 2, **caractérisé en ce que**, dans la première partie (DS-B), des trames binaires (BR) sont transmises d'un dispositif maître (Master) M à au moins un dispositif dépendant (Slave) (S1 à S8) et **en ce que**, dans la deuxième partie (US-B), des trames binaires (BR) sont transmises de l'au moins un dispositif dépendant (Slave) (S1 à S8) au dispositif maître (Master) (M).

4.    Procédé selon la revendication 3, **caractérisé par** l'attribution de droits d'émission et de réception par le dispositif maître (Master) (M) pour les dispositifs dépendants (Slaves) (S1 à S8) par polling.

5.    Procédé selon l'une des revendications précédentes, **caractérisé en ce qu'**à l'aide d'un procédé de contrôle d'accès multiple basé sur le multiplexage temporel la première et la deuxième parties (DS-B, US-B) du paquet de transmission sont organisées respectivement en au moins une trame partielle et **en ce que** les trames binaires (BR) sont respectivement insérées, en dépendance de la direction, dans une trame partielle de la première ou de la deuxième partie (DS-B, US-B) du paquet de transmission.

6.    Procédé selon la revendication 5, **caractérisé en ce que** la première et la deuxième partie (DS-B, US-B) sont organisées respectivement en huit trames partielles, une trame partielle étant respectivement affectée à demeure, dans la première partie (DS-B) et dans la deuxième partie (US-B), à chaque dispositif dépendant (Slave) (S1 à S8) raccordé au réseau électrique basse tension (NSN) pour une transmission de données bidirectionnelle avec le dispositif maître (Master) (M).

7.    Procédé selon la revendication 5, **caractérisé en ce que** la première partie (DS-B) est organisée en une seule trame partielle, **en ce que** la deuxième partie (US-B) est organisée en huit trames partielles, une trame partielle étant respectivement affectée à demeure, dans la deuxième partie (US-B), à chaque dispositif dépendant (Slave) (S1 à S8) raccordé au réseau électrique basse tension (NSN) pour une transmission de données vers le dispositif maître (Master) (M) et **en ce qu'**il se produit une transmission de données du dispositif maître (Master) (M) vers les dispositifs dépendants (Slaves) (S1 à S8) conjointement par l'intermédiaire de la trame partielle de la première partie (DS-B).

8.    Procédé selon l'une des revendications précédentes, **caractérisé par** l'adjonction, à la trame binaire (BR), d'une information pour la récupération de la trame $S_0$ (SR) lors de la conversion d'une trame $S_0$ (SR) en une trame binaire (BR).

9.    Procédé selon la revendication 8, **caractérisé par** l'insertion, dans la trame binaire (BR), d'un bit de synchronisation (SYN) et d'un bit d'état initial (ANF) en tant qu'information.

10.    Dispositif pour convertir un flux de données $S_0$ bidirectionnel afin de le transmettre sur un réseau basse tension (NSN), avec

-    une unité de conversion (UE) pour la conversion du flux de données $S_0$ pseudo-ternaire composé d'une suite de trames $S_0$ (SR) en un flux de données binaire composé d'une suite de trames binaires (BR),
-    une unité de protocole (PE) pour insérer les trames binaires (BR) dans un paquet de transmission prévu pour une transmission de données sur le réseau électrique basse tension (NSN), le paquet de transmission étant réparti, à l'aide d'un procédé de duplexage temporel, en une première partie (DS-B) pour une transmission de données de trames binaires (BR) dans une première direction de transmission (DS) et en une deuxième partie (US-B) pour une transmission de données de trames binaires (BR) dans une deuxième direction de transmission (US)
-    une unité de transmission (UEE) pour injecter les paquets de transmission dans le réseau électrique basse tension (NSN).

11.    Dispositif selon la revendication 10, **caractérisé en**

**ce qu'**aux fins d'une transmission de données sur le réseau électrique basse tension (NSN) est établie une relation de communication «Master-Slave».

12. Dispositif selon la revendication 11, **caractérisé en ce qu'**un compteur (ZE) affecté à chaque zone (IHB) du réseau électrique basse tension (NSN) en aval du compteur est configuré comme dispositif maître (Master) (M).

13. Dispositif selon la revendication 12, **caractérisé en ce que** des dispositifs de communication connectés respectivement par l'intermédiaire d'un dispositif de raccordement (AE) à la zone (IHB) du réseau électrique basse tension (NSN) en aval du compteur sont configurés comme dispositifs dépendants (Slaves) (S1 à S8).

14. Dispositif selon la revendication 13, **caractérisé en ce qu'**au maximum huit dispositifs dépendants (Slaves) (S1 à S8) sont raccordables au réseau électrique basse tension (NSN).

# Fig 1

EP 1 243 084 B1

IHB

ZE

NSN

IHB

ZE

Verbraucher

AHB

HSN

HSN-MSN TS

MSN

MSN-NSN TS

ZE (M)

IHB

AE

S

AE

AE

S

AE

AE

Hochspannungsebene

Mittelspannungsebene

Niederspannungsebene

Fig 2

SR: 48 Bit in 250 µs

DS

US

je 192 kBit/s

pseudoternärer
S(0)-Datenstrom (inv. AMI)

SYN

ANF

UE

DS

US

je (48+H)Bit/250µs

binärer
S(0)-Datenstrom

BR: 48 Bit des S(0)-Datenstroms

2 Bit Offset

D-Bit als E-Bit (Echobit)

# Fig 3

ternärer S(0) Datenstrom

binärer S(0)-Datenstrom

NSN

DS

US

UE ⟷ PE ⟷ UEE →

PLC-Datenbaket: (800+PLC-H) Bit in 250µs

DS-B US-B

PLC-H

S1 S2 S3 S4 S5 S6 S7 S8 S1 S2 S3 S4 S5 S6 S7 S8

......  ......

BR(S1): BR(S8):

DS DS

US US

EP 1 243 084 B1

EP 1 243 084 B1

ternärer S(0) Datenstrom

binärer S(0)-Datenstrom

NSN

DS

US

UE

PE

UEE

PLC-Datenbaket: (450+PLC-H) Bit in 250µs

DS-B

US-B

PLC-H

S1-8 | S1 | S2 | S3 | S4 | S5 | S6 | S7 | S8

BR:

DS

US

Fig 4